# EUROPEAN PATENT SPECIFICATION

(11) **EP 4 424 532 B1**
(45) Date of publication and mention of the grant of the patent: **30.09.2026**
(21) Application number: 22915209.5
(22) Date of filing: 30.12.2022
(51) Int. Cl.: B60G 17/056, B60G 17/08, B60G 17/04, B60G 13/08, F16F 9/18, B60G 21/067, B60G 21/073

(54) **HYDRAULIC ACTIVE SUSPENSION AND VEHICLE HAVING SAME**
HYDRAULISCHE AKTIVE AUFHÄNGUNG UND FAHRZEUG DAMIT
SUSPENSION ACTIVE HYDRAULIQUE ET VÉHICULE LA COMPRENANT

(30) Priority: 30.12.2021 CN 202123435005 U
(43) Date of publication of application: 04.09.2024
(73) Proprietor: BYD Company Limited, Shenzhen, Guangdong 518118 (CN)
(72) Inventor: XU, Haolun, Shenzhen, Guangdong 518118 (CN); LIAO, Yinsheng, Shenzhen, Guangdong 518118 (CN); ZHANG, Hongzhou, Shenzhen, Guangdong 518118 (CN); HUANG, Taishuo, Shenzhen, Guangdong 518118 (CN); ZHANG, Lei, Shenzhen, Guangdong 518118 (CN)
(74) Representative: Arnold & Siedsma
(86) International application number: PCT/CN2022/144046
(87) International publication number: WO 2023/125961

(56) References cited:
- CN-A- 1 751 905
- CN-A- 104 608 574
- CN-A- 108 422 824
- CN-U- 217 598 270
- CN-U- 217 598 271
- FR-A1- 2 849 625
- JP-A- 2005 088 766
- JP-A- 2006 218 917
- JP-A- 2008 189 279
- JP-A- 2008 247 209
- JP-A- 2008 247 209

## Description

### FIELD

The present invention relates to the field of vehicles, and more specifically, to a hydraulic active suspension and a vehicle having the hydraulic active suspension.

### BACKGROUND

A suspension is an apparatus transmitting an interaction force between a body and an axle, is one of four components of a vehicle, and is a key component that affects driving performance of the vehicle. The suspension can transmit a force and torque fed back by a road surface, attenuate wheel vibration, ease impact, and improve driving experience of a driver, so that the vehicle can obtain an ideal motion characteristic and a stable driving capability. Suspensions in the related arts mostly include springs, guide mechanisms, shock absorbers, and the like. A damping coefficient of the shock absorber and stiffness of the spring are fixed. Consequently, comfort and operation stability cannot be both considered. JP 2008 247209 A, which shows the preamble of claim 1, discloses, according to the machine translation of claim 1, a plurality of suspension cylinders provided between the vehicle body and a wheel holding device that holds the wheels, respectively, and a fluid pressure source connected to the suspension cylinders. A vehicle height control device including a fluid supply device that supplies a fluid of the fluid pressure source to the suspension cylinder and increases a vehicle height that is a relative positional relationship between the wheel and the vehicle body in the vertical direction, The fluid pressure source includes: (a) a fluid pressure generating device that is operated by power; and (b) an accumulator that stores the fluid supplied from the fluid pressure generating device in a pressurized state, and the fluid supply device includes: When the vehicle height is increased for each of the left and right front wheels and the left and right rear wheels, the fluid pressure of the suspension cylinder of the left and right front wheels and the fluid pressure of the suspension cylinder of the left and right rear wheels at the start of vehicle height control higher fluid pressure The suspension cylinder, vehicle height control device which comprises a priority distribution unit for distributing the fluid in the accumulator preferentially. JP 2008 189279 A discloses, according to the machine translation of claim 1, a fluid including a wheel holding portion that holds a wheel of the vehicle, a fluid pressure actuator provided between the vehicle body, (a) a low pressure source, and (b) a pressure accumulator that accommodates the fluid in a pressurized state. A vehicle having a relative positional relationship between the wheel holding portion and the vehicle body by controlling the flow of fluid from the fluid source to the fluid pressure actuator and the flow of fluid from the fluid pressure actuator to the fluid source. A vehicle height control device that controls the height, and when the accumulator pressure that is the pressure of the fluid in the accumulator for pressure accumulation is higher than a predetermined set pressure in a state where fluid does not flow in and out of the accumulator for pressure accumulation, An accumulator pressure reducing device that lowers the accumulator pressure in at least one of a case where the accumulator pressure increases by a predetermined value or more. CN 108 422 824 A discloses, according to the machine translation of the abstract, a valve control device configured to switch spring switching valves for front wheels to a cut-off state and the spring switching valves for rear wheels to the connected state when the oil pressure of the hydraulic oil of rear wheel side oil hydraulic cylinders, which is detected by a rear wheel side oil pressure detection means, is no less than a predetermined oil pressure threshold and a traveling state determination means determines that the vehicle is in the predetermined traveling state and high pressure time valve switching conditions are satisfied.

### SUMMARY

The present disclosure is intended to resolve one of technical problems in the related art at least to some extent.

Therefore, an objective of the present disclosure is to provide a hydraulic active suspension, thereby effectively resolving a contradiction between vehicle comfort and operation stability. The structure of the entire hydraulic active suspension is compact, thereby facilitating space arrangement of a complete vehicle.

The present disclosure further provides a vehicle having the foregoing hydraulic active suspension.

A hydraulic active suspension according to the invention is configured for a vehicle and includes: a shock absorber, a common channel, an accumulator module, and a liquid storage apparatus. The shock absorber has a housing, a piston, and a piston rod. The housing is adapted to be connected to a wheel or an axle. The piston is located in the housing and defines an upper chamber and a lower chamber of the shock absorber. One end of the piston rod is connected to the piston. The other end of the piston rod projects out of the housing and is adapted to be connected to a body. Both the liquid storage apparatus and the accumulator module are in communication with the lower chamber through the common channel. The liquid storage apparatus is configured to adjust a height of the vehicle. The accumulator module is configured to adjust at least one of stiffness and damping of the shock absorber.

According to the hydraulic active suspension of the invention, the body height can be adjusted, and vehicle operation stability can be improved without compromising vehicle comfort, thereby effectively resolving a contradiction between the vehicle comfort and the operation stability. In addition, the stiffness and the damping can be further adjusted, so that the vehicle on which the hydraulic active suspension is arranged drives more stably. In addition, a flow path between the liquid storage apparatus and the lower chamber overlaps a flow path between the accumulator module and the lower chamber, that is, a pipeline for adjusting the body height overlaps a pipeline for adjusting the stiffness and the damping. Therefore, the number of connection pipelines can be reduced, so that the structure of the entire hydraulic active suspension is compact, thereby facilitating space arrangement of the complete vehicle.

According to the invention, a first end of the common channel is in communication with the lower chamber, a second end of the common channel is in communication with the liquid storage apparatus, a module connection part is arranged on the common channel, and the module connection part is located between the first end and the second end and is configured to be in communication with the accumulator module.

In some embodiments of the present disclosure, a first control valve is arranged on the common channel, and the first control valve is arranged between the second end and the module connection part.

In some embodiments of the present disclosure, the first accumulator is in communication with the first connection point, the second control valve is arranged between the first connection point and the lower chamber, and the second control valve is the adjustment valve configured to adjust opening to adjust the damping of the shock absorber.

In some embodiments of the present disclosure, the second accumulator is in communication with the second connection point, and the third control valve selectively communicates the second connection point with the second accumulator.

According to the invention, the module connection part includes a first connection point and a second connection point, the accumulator module includes a first accumulator, a second accumulator, a second control valve, and a third control valve, the first accumulator is connected to the first connection point, the second accumulator is connected to the second connection point, the second control valve is connected between the first connection point and the lower chamber, the third control valve is arranged between the second accumulator and the second connection point, the second control valve is an adjustment valve to adjust the damping of the shock absorber, and the third control valve is a cutoff valve to adjust the stiffness of the shock absorber.

In some embodiments of the present disclosure, the first connection point is arranged on a side of the second connection point away from the second end.

According to the invention, a fourth control valve is arranged between the first connection point and the second connection point.

In some embodiments of the present disclosure, the shock absorber is a front-axle shock absorber, a third connection point is arranged between the module connection part and the first end, the hydraulic active suspension further includes a third accumulator, and the third accumulator is in communication with the third connection point.

In some embodiments of the present disclosure, the shock absorber is a rear-axle shock absorber, the module connection part further includes a third connection point, the third connection point is located between the first connection point and the second connection point, the accumulator module includes a third accumulator, and the third accumulator is in communication with the third connection point.

A vehicle according to embodiments of the present disclosure includes the hydraulic active suspension according to any one of the foregoing embodiments of the present disclosure.

According to the vehicle in the embodiments of the present disclosure, the hydraulic active suspension according to any one of the foregoing embodiments is arranged, so that the body height can be adjusted, and vehicle operation stability can be improved without compromising vehicle comfort, thereby effectively resolving a contradiction between the vehicle comfort and the operation stability. In addition, the stiffness and the damping can be further adjusted, so that the vehicle on which the hydraulic active suspension is arranged drives more stably. In addition, a flow path between the liquid storage apparatus and the lower chamber overlaps a flow path between the accumulator module and the lower chamber, that is, a pipeline for adjusting the body height overlaps a pipeline for adjusting the stiffness and the damping. Therefore, the number of connection pipelines can be reduced, so that the structure of the entire hydraulic active suspension is compact, thereby facilitating space arrangement of the complete vehicle.

Other aspects and advantages of the present disclosure will be given in the following descriptions, some of which will become apparent from the following descriptions or can be learned from practices of the present disclosure.

### BRIEF DESCRIPTION OF THE DRAWINGS

FIG. 1 is a schematic diagram of a hydraulic active suspension according to an embodiment of the present disclosure; and
FIG. 2 is a schematic diagram of a shock absorber according to an embodiment of the present disclosure.

Reference signs:
hydraulic active suspension 1000;
liquid receiver 1;
shock absorber 200, housing 201, upper chamber 2011, lower chamber 2012, piston 202, piston rod 203, and oil channel 204;
first control valve 3;
second control valve 8;
first accumulator 9;
second accumulator 10 and third control valve 11;
fourth control valve 12; and
control pump 26, control valve body 260, drive motor 261, oil return valve 27, one-way valve 28, pressure-stabilizing accumulator 29, third accumulator 30, and pressure relief valve 31.

### DETAILED DESCRIPTION

Embodiments of the present disclosure are described in detail below, and examples of the embodiments are shown in accompanying drawings, where the same or similar elements or the elements having same or similar functions are denoted by the same or similar reference signs throughout the description. The embodiments described below with reference to the accompanying drawings are examples, and are intended to explain the present disclosure and cannot be construed as limitations to the present disclosure.

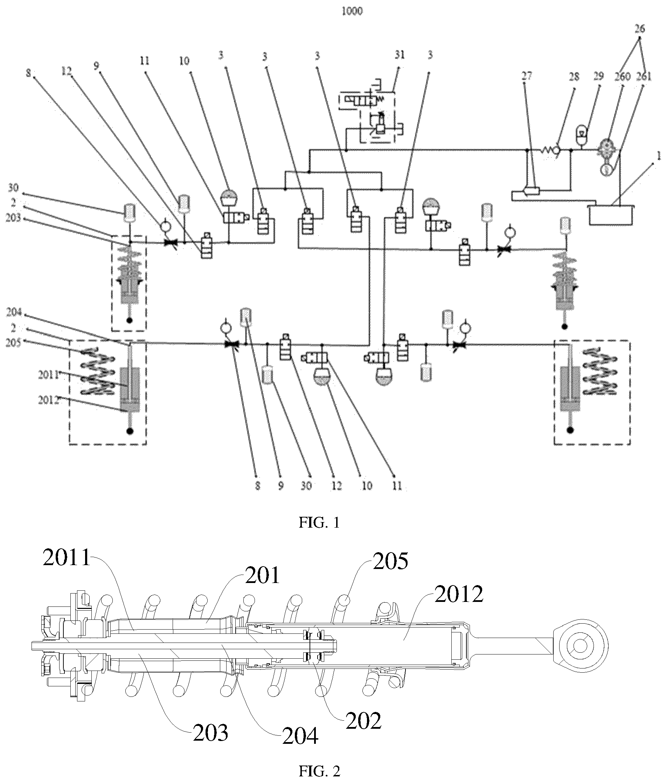

The following describes a hydraulic active suspension 1000 according to embodiments of the present disclosure with reference to FIG. 1 and FIG. 2. The hydraulic active suspension 1000 is configured for a vehicle. The hydraulic active suspension 1000 is arranged on a body, and the hydraulic active suspension 1000 is further connected to a wheel or an axle.

As shown in FIG. 1 and FIG. 2, the hydraulic active suspension 1000 according to the embodiments of the present disclosure includes: a shock absorber 200, a common channel, an accumulator module, and a liquid storage apparatus. The shock absorber 200 has a housing 201, a piston 202, and a piston rod 203. The housing 201 is adapted to be connected to the wheel or the axle. The piston 202 is located in the housing 201 and defines an upper chamber 2011 and a lower chamber 2012 of the shock absorber 200. One end of the piston rod 203 is connected to the piston 202. The other end of the piston rod 203 projects out of the housing 201 and is adapted to be connected to the body. Both the liquid storage apparatus and the accumulator module are in communication with the lower chamber 2012 through the common channel. The liquid storage apparatus is configured to adjust a body height of the vehicle. The accumulator module is configured to adjust at least one of stiffness and damping of the shock absorber 200.

Specifically, the liquid storage apparatus is in communication with the lower chamber 2012 through the common channel, and the accumulator module is also in communication with the lower chamber 2012 through the common channel, that is, a flow path between the liquid storage apparatus and the lower chamber 2012 overlaps a flow path between the accumulator module and the lower chamber 2012, that is, a pipeline for adjusting the body height overlaps a pipeline for adjusting the stiffness and the damping. Both the body height and at least one of the stiffness and the damping can be adjusted through the common channel. Therefore, the number of connection pipelines can be reduced, so that the structure of the entire hydraulic active suspension 1000 is compact, thereby facilitating space arrangement of the complete vehicle.

It can be further understood that oil in the liquid storage apparatus can enter the lower chamber 2012 through the common channel. When the piston rod 203 moves downward to make a volume in the lower chamber 2012 smaller, oil in the lower chamber 2012 may be discharged to the liquid storage apparatus through the common channel.

Specifically, the hydraulic active suspension 1000 has a lifting mode and a height reduction mode. In the lifting mode, oil in the liquid storage apparatus can enter the common channel, and the hydraulic oil entering the common channel flows into the lower chamber 2012, so that hydraulic pressure in the lower chamber 2012 increases and therefore the piston 202 moves upward. When the piston 202 moves upward, the piston rod 203 is driven to move upward, thereby lifting the body.

In the height reduction mode, oil can flow out of the lower chamber 2012 to flow to the liquid storage apparatus through the common channel, so that hydraulic pressure in the lower chamber 2012 of the shock absorber 200 decreases and therefore drives the piston 202 to move downward. When the piston 202 moves downward, the piston rod 203 is driven to move downward, to drive the body to move downward, thereby reducing the body height of the vehicle.

A vehicle may encounter various road conditions in a driving process. Once a suspension system of a vehicle in the related arts is selected, the suspension system cannot be adjusted in a driving process of the vehicle. Therefore, a conventional suspension can only ensure that a vehicle achieves optimal performance matching under a specific road and speed condition, and can only passively withstand a force of the ground on a body. Suspension parameters cannot be changed based on different roads and vehicle speeds, and the force of the ground on the body cannot be actively controlled.

According to the hydraulic active suspension 1000 in the embodiments of the present disclosure, the body height can be adjusted based on a road condition or the like. For example, When the vehicle passes through a relatively rugged mountain road, the vehicle can enter the lifting mode, so that a center of mass of the vehicle can be lifted, thereby improving vehicle driving stability. When impact of the body on a driving speed needs to reduced, the vehicle can enter the height reduction mode, so that the center of mass of the vehicle is lowered. Certainly, it can be understood that the foregoing descriptions are merely example descriptions, and the body height can be alternatively adjusted based on an actual requirement in a driving process.

It should be explained that the accumulator module plays a role of energy storage, that is, oil can flow into the accumulator module for energy storage. When the hydraulic active suspension 1000 needs oil, oil in the accumulator module is discharged for supply.

Specifically, when the accumulator module is configured to adjust the damping of the shock absorber 200, a flow amount of oil in the common channel (an amount of oil entering the shock absorber 200) can be adjusted to adjust the damping. When the accumulator module is configured to adjust the stiffness of the shock absorber 200, the common channel is communicated with the accumulator module, or communication between the accumulator module and the common channel is broken. Therefore, an adjustment function of the hydraulic active suspension 1000 can be enhanced, so that the vehicle on which the hydraulic active suspension 1000 is arranged drives more stably.

According to the hydraulic active suspension 1000 in the embodiments of the present disclosure, the body height can be adjusted, and vehicle operation stability can be improved without compromising vehicle comfort, thereby effectively resolving a contradiction between the vehicle comfort and the operation stability. In addition, the stiffness and the damping can be further adjusted, the vehicle on which the hydraulic active suspension 1000 is arranged drives more stably. In addition, a flow path between the liquid storage apparatus and the lower chamber 2012 overlaps a flow path between the accumulator module and the lower chamber 2012. Therefore, the number of connection pipelines can be reduced, so that the structure of the entire hydraulic active suspension 1000 is compact, thereby facilitating space arrangement of the complete vehicle.

In some embodiments of the present disclosure, a first end of the common channel is in communication with the lower chamber 2012, a second end of the common channel is in communication with the liquid storage apparatus, a module connection part is arranged on the common channel, and the module connection part is located between the first end and the second end and is configured to be in communication with the accumulator module. That is, the accumulator module is connected on a connection path between the liquid storage apparatus and the shock absorber. Therefore, the number of connection pipelines can be further reduced, so that the structure of the entire hydraulic active suspension 1000 structure is more compact.

Optionally, as shown in FIG. 1, a first control valve 3 is arranged on the common channel, and the first control valve 3 is arranged between the second end and the module connection part. Therefore, the first control valve 3 is arranged, so that when the first control valve 3 is closed, communication between the liquid storage apparatus and the accumulator module is broken, and oil in the liquid storage apparatus cannot flow to the accumulator module and the shock absorber 200. In this case, the stiffness and/or the damping of the shock absorber 200 can be adjusted by using the accumulator module. When the first control valve 3 is opened, oil in the liquid storage apparatus can flow to the accumulator module for energy storage, or the body height of the vehicle can be adjusted by using the liquid storage apparatus. Therefore, a mode of the hydraulic active suspension 1000 can be adjusted based on a requirement.

As shown in FIG. 1, according to the invention, the module connection part includes a first connection point, the accumulator module includes a first accumulator 9 and a second control valve 8, the first accumulator 9 is in communication with the first connection point, the second control valve 8 is arranged between the first connection point and the lower chamber 2012, and the second control valve 8 is an adjustment valve. The second control valve 8 is configured to adjust opening to adjust the damping of the shock absorber 200.

Specifically, the first accumulator 9 can store energy. When the opening of the second control valve 8 is reduced and therefore an amount of oil that can flow through the common channel is reduced, a flow path from the shock absorber to the common channel becomes narrower, and damping is relatively large. When the opening of the second control valve 8 is increased, the flow path from the shock absorber to the common channel becomes wider, and damping is relatively small. Therefore, through cooperation between the first accumulator 9 and the second control valve 8, reliability of damping adjustment of the hydraulic active suspension 1000 can be ensured, thereby ensuring that an amount of oil flowing through the common channel matches needed damping. In other words, a flow amount of oil in the corresponding common channel can be adjusted by using the second control valve 8. Therefore, damping of the corresponding common channel can be adjusted, to adjust damping of the hydraulic active suspension 1000, so that the damping of the hydraulic active suspension 1000 can be adjusted based on an actual case, for example, based on a road condition, to ensure that the damping of the hydraulic active suspension 1000 can meet a shock absorption requirement, thereby effectively resolving the contradiction between the vehicle comfort and the operation stability.

According to the invention, as shown in FIG. 1, the module connection part further includes a second connection point, the accumulator module includes a second accumulator 10 and a third control valve 11, the second accumulator 10 is in communication with the second connection point, and the third control valve 11 is arranged between the second accumulator 10 and the second connection point and selectively communicates the second connection point with the second accumulator 10. Specifically, when the third control valve 11 is opened, oil in the second accumulator 10 can be discharged to the lower chamber 2012 of the shock absorber 200. When the third control valve 11 is closed, the second accumulator 10 is disconnected from the shock absorber 200. Therefore, oil in the shock absorber 200 cannot be discharged to the second accumulator 10, and oil in the second accumulator 10 cannot be discharged to the shock absorber 200, so that the stiffness of the shock absorber 200 can be improved.

As shown in FIG. 1, according to the invention, the module connection part includes a first connection point and a second connection point, the accumulator module includes a first accumulator 9, a second accumulator 10, a second control valve 8, and a third control valve 11, the first accumulator 9 is connected to the first connection point, the second accumulator 10 is connected to the second connection point, the second control valve 8 is connected between the first connection point and the lower chamber 2012, the third control valve 11 is arranged between the second accumulator 10 and the second connection point, the second control valve 8 is the adjustment valve to adjust the damping of the shock absorber 200, and the third control valve 11 is the cutoff valve to adjust the stiffness of the shock absorber 200.

Specifically, when opening of the second control valve 8 is reduced and therefore an amount of oil that can flow through the common channel is reduced, a flow path from the shock absorber to the common channel becomes narrower, and damping is relatively large. When the opening of the second control valve 8 is increased, the flow path from the shock absorber to the common channel becomes wider, and damping is relatively small. Therefore, through cooperation between the first accumulator 9 and the second control valve 8, reliability of damping adjustment of the hydraulic active suspension 1000 can be ensured, thereby ensuring that an amount of oil flowing through the common channel matches needed damping. In other words, a flow amount of oil in the corresponding common channel can be adjusted by using the second control valve 8. Therefore, damping of the corresponding common channel can be adjusted, to adjust damping of the hydraulic active suspension 1000, so that the damping of the hydraulic active suspension 1000 can be adjusted based on an actual case, for example, based on a road condition, to ensure that the damping of the hydraulic active suspension 1000 can meet a shock absorption requirement, thereby effectively resolving the contradiction between the vehicle comfort and the operation stability.

When the third control valve 11 is opened, oil in the second accumulator 10 can be discharged to the lower chamber 2012 of the shock absorber 200. When the third control valve 11 is closed, the second accumulator 10 is disconnected from the shock absorber 200. Therefore, oil in the shock absorber 200 cannot be discharged to the second accumulator 10, and oil in the second accumulator 10 cannot be discharged to the shock absorber 200, so that the stiffness of the shock absorber 200 can be improved.

Optionally, the first connection point is arranged on a side of the second connection point away from the second end.

According to the invention, a fourth control valve 12 is arranged between the first connection point and the second connection point. Therefore, the number of accumulators in communication with the shock absorber 200 can be controlled through opening or closing of the fourth control valve 12, to adjust the stiffness or the damping of the shock absorber 200.

In some embodiments of the present disclosure, as shown in FIG. 1, the shock absorber 200 is a front-axle shock absorber 200, a third connection point is arranged between the module connection part and the first end, the hydraulic active suspension 1000 further includes a third accumulator 30, and the third accumulator 30 is in communication with the third connection point. It can be understood that, in a driving process of the vehicle, if the vehicle is hit by a bump or the like, oil in a lower chamber 2012 of each shock absorber 200 can enter a third accumulator 30 through a common channel to store energy, to implement fast pressure reduction. It can be further understood that, when the vehicle encounters a relatively large obstacle, in principle, a front-axle wheel first encounters the obstacle. Therefore, the third accumulator 30 connected to the front-axle shock absorber 200 is arranged between the module connection part and the first end, so that a fast response can be implemented.

In some embodiments of the present disclosure, as shown in FIG. 1, the shock absorber 200 is a rear-axle shock absorber 200, the module connection part further includes a third connection point, the third connection point is located between the first connection point and the second connection point, the accumulator module includes a third accumulator 30, and the third accumulator 30 is in communication with the third connection point. Specifically, after the rear-axle third accumulator 30 is arranged between the first accumulator 9 and the second accumulator 10, when oil flows out of the lower chamber 2012, damping is performed before pressure relief, thereby helping improve comfort.

In some embodiments of the present disclosure, the liquid storage apparatus includes a liquid receiver 1, a control pump 26, a one-way valve 28, and an oil return valve 27. A liquid outlet of the liquid receiver 1 is connected to the common channel through a liquid outlet channel. The control pump 26 and the one-way valve 28 are connected on the liquid outlet channel in series to communicate or cut off the liquid outlet channel. A liquid inlet of the liquid receiver 1 is connected to the common channel through a liquid return channel, and the oil return valve 27 is connected on the liquid return channel in series to communicate or cut off the liquid return channel. Specifically, the liquid receiver 1 has an independent liquid return channel and liquid outlet channel. When liquid discharge is needed, the control pump 26 is opened and the oil return valve 27 is in a closed state, and the control pump 26 directs oil to the common channel. When liquid return is needed, the control pump 26 is closed and the oil return valve 27 is opened, so that oil from the common channel can flow to the liquid receiver 1 through the oil return valve 27. During liquid return, due to existence of the one-way valve 28, oil can be effectively prevented from flowing to the control pump 26, to prevent the oil from flowing to the liquid outlet through the control pump 26 when an accident occurs on the control pump 26. This ensures reliable liquid discharge and liquid return.

In some examples of the present disclosure, as shown in FIG. 1, the control pump 26 includes a control valve body 260 and a drive motor 261, the drive motor 261 is electrically connected to a valve in the control valve body 260, and the drive motor 261 rotates to control the valve to rotate to implement opening or closing of the control pump 26. Therefore, opening or closing of the control pump 26 is implemented through cooperation between the drive motor 261 and the valve, so that relatively reliable operation of the control pump 26 can be ensured, to reduce impact of oil on opening or closing of the control pump 26.

According to some embodiments of the present disclosure, as shown in FIG. 1, the hydraulic active suspension 1000 further includes a pressure relief valve 31, and the pressure relief valve 31 is located at an outlet port of the control pump 26. When pressure of a liquid outlet of the control pump 26 reaches a specific threshold, the pressure relief valve 31 is opened to relieve pressure, to ensure that the hydraulic active suspension 1000 is in a normal pressure range. It should be noted that a working principle of the pressure relief valve 31 is a related art, and therefore is not described in detail herein.

In some embodiments of the present disclosure, as shown in FIG. 1, the hydraulic active suspension 1000 further includes a pressure-stabilizing accumulator 29, and the pressure-stabilizing accumulator 29 is arranged at an outlet end of the control pump 26, so that the pressure-stabilizing accumulator 29 can stabilize pressure and eliminate flow amount fluctuation at the outlet end of the control pump 26.

In some embodiments of the present disclosure, as shown in FIG. 1 and FIG. 2, the piston rod 203 is a hollow piston rod, an oil channel 204 is arranged in the piston rod 203, the oil channel 204 is connected to the lower chamber 2012, and the common channel is connected to the oil channel 204.

It can be understood that, in a driving process of the vehicle, the axle may vibrate, for example, shake, relative to the body. When the hydraulic active suspension 1000 according to the embodiments of the present disclosure is installed on the vehicle, the housing 201 is installed on the axle, and the piston rod 203 is connected to the body. Therefore, it can be learned that a top end of the piston rod 203 and the body are relatively stationary, and the housing 201 can move with the axle relative to the piston rod 203. Because the oil channel 204 in the piston rod 203 is connected to the common channel, impact of vibration of the axle on a connection part of the common channel can be reduced, the common channel can be stably connected, abrasion at a connection part between the common channel and the liquid storage apparatus can be reduced, and abrasion at a connection part between the common channel and the piston rod 203 can be reduced.

The following describes a hydraulic active suspension according to a specific example of the present disclosure with reference to FIG. 1. It should be noted that the foregoing specific examples are merely example descriptions, but not limitative descriptions, and example modifications can be made to the specific examples based on actual cases.

As shown in FIG. 1, a hydraulic active suspension 1000 according to embodiments of the present disclosure includes a left front shock absorber assembly 2, a right front shock absorber assembly 2, a left rear shock absorber assembly 2, a right rear shock absorber assembly 2, an accumulator module, a liquid receiver 1, a control pump 26, an oil return valve 27, a one-way valve 28, a pressure-stabilizing accumulator 29, a pressure relief valve 31, and a second control valve 8. The accumulator module includes a first accumulator 9, a second accumulator 10, and a third accumulator 30.

The left front shock absorber assembly 2 and the right front shock absorber assembly 2 each include a shock absorber 200 and a shock absorber spring 205. The shock absorber spring 205 is sleeved and fastened onto the shock absorber 200. The left rear shock absorber assembly 2 and the right rear shock absorber assembly 2 each include a shock absorber 200 and a shock absorber spring 205. The shock absorber spring 205 and the shock absorber 200 are arranged in parallel. Two ends of a shock absorber spring 205 of the left rear shock absorber assembly 2 are respectively connected to the body and the axle. Two ends of a shock absorber spring 205 of the right rear shock absorber assembly 2 are respectively connected to the body and the axle. Each shock absorber 200 includes a housing 201, a piston rod 203, and a piston 202. The piston rod 203 is connected to the piston 202. The piston 202 is movably arranged in the housing 201 to define an upper chamber 2011 and a lower chamber 2012. An oil channel 204 is arranged in the piston rod 203. The oil channel 204 is in communication with the lower chamber 2012. An oil channel 204 of each shock absorber assembly 2 is connected to a liquid storage apparatus through a common channel. A first control valve 3 is arranged on each common channel.

The liquid receiver 1 has a liquid outlet and a liquid inlet. The control pump 26 is separately connected to the liquid outlet and the common channel to guide oil in the liquid receiver 1 to the common channel. The oil return valve 27 is separately connected to the liquid inlet and the common channel. When the oil return valve 27 is opened, oil flows from the common channel to the liquid inlet. The one-way valve 28 is arranged at an outlet end of the control pump 26 and provides one-way communication. The pressure-stabilizing accumulator 29 is arranged at the outlet end of the control pump 26 and is located between the one-way valve 28 and the control pump 26. The pressure-stabilizing accumulator 29 can stabilize and eliminate flow amount fluctuation at the outlet end of the control pump 26.

A first control valve 3 corresponding to each shock absorber assembly 2 is connected on a corresponding common channel in series. The first control valve 3 is configured to control communication or cutoff of the common channel.

A second accumulator 10 corresponding to each shock absorber assembly 2 is connected to the common channel. A third control valve 11 is arranged at an oil inlet/outlet of the second accumulator 10. The third control valve 11 is in a normally closed state.

A second control valve 8, a first accumulator 9, and a fourth control valve 12 are further arranged on each common channel. The second control valve 8 is configured to adjust a flow amount of the corresponding common channel to adjust damping of the hydraulic active suspension 1000. The first accumulator 9 can store energy. The fourth control valve 12 is arranged between the first accumulator 9 and a second accumulator 10.

One third accumulator 30 is correspondingly arranged for each shock absorber assembly 2. A third accumulator 30 corresponding to the left front shock absorber assembly 2 is located between a first accumulator 9 and a corresponding oil channel 204. A third accumulator 30 corresponding to the right front shock absorber assembly 2 is located between a first accumulator 9 and a corresponding oil channel 204. A third accumulator 30 corresponding to the left rear shock absorber assembly 2 is located between a first accumulator 9 and a second accumulator 10. A third accumulator 30 corresponding to the right rear shock absorber assembly 2 is located between a first accumulator 9 and a second accumulator 10.

Specifically, the hydraulic active suspension 1000 has a pressurizing mode, a lifting mode, and a height reduction mode. In the pressurizing mode, first control valves 3 are opened, fourth control valves 12 are closed, third control valves 11 are opened, and the control pump 26 operates and therefore oil in the liquid receiver 1 respectively flows to corresponding second accumulators 10 through four common channels to store energy. After energy is stored for each second accumulator 10, the third control valves 11 are closed.

In the lifting mode, oil in the liquid receiver 1 or oil in accumulator modules can enter the oil channel 204 of the left front shock absorber assembly 2, the oil channel 204 of the right front shock absorber assembly 2, an oil channel 204 of the left rear shock absorber assembly 2, and an oil channel 204 of the right rear shock absorber assembly 2, and hydraulic oil entering each oil channel 204 flows into a lower chamber 2012, so that hydraulic pressure in the lower chamber 2012 increases and therefore a piston 202 moves upward. When the piston 202 moves upward, a piston rod 203 is driven to move upward. A piston rod 203 of the left front shock absorber assembly 2 moves upward, a piston rod 203 of the right front shock absorber assembly 2 moves upward, a piston rod 203 of the left rear shock absorber assembly 2 moves upward, and a piston rod 203 of the right rear shock absorber assembly 2 moves upward, to drive the body to move upward, thereby lifting the body.

In the height reduction mode, the control pump 26 stops working. Under a gravity action of the vehicle, oil can separately flow from the oil channel 204 of the left front shock absorber assembly 2, the oil channel 204 of the right front shock absorber assembly 2, the oil channel 204 of the left rear shock absorber assembly 2, and the oil channel 204 of the right rear shock absorber assembly 2, and hydraulic pressure in the lower chamber 2012 of each shock absorber 200 decreases and therefore the piston 202 moves downward. When the piston 202 moves downward, the piston rod 203 is driven to move downward. The piston rod 203 of the left front shock absorber assembly 2 moves downward, the piston rod 203 of the right front shock absorber assembly 2 moves downward, the piston rod 203 of the left rear shock absorber assembly 2 moves downward, and the piston rod 203 of the right rear shock absorber assembly 2 moves downward, to drive the body to move downward, thereby reducing the body height. It can be understood that, in the height reduction mode, oil discharged from each shock absorber assembly 2 can be directly discharged to the liquid receiver 1, can be discharged to an accumulator assembly for energy storage, or can be discharged to both the liquid receiver 1 and the accumulator assembly.

When pressure in the hydraulic active suspension 1000 is relatively large, for example, it is detected that a pressure at the outlet of the control pump 26 reaches a specific threshold (30 MPa), the oil return valve 27 is opened to relieve pressure, to ensure that the hydraulic active suspension 1000 is in a normal pressure range. In this case, oil in each shock absorber 200 can flow into the liquid receiver 1 through a common channel and the oil return valve 27.

After the pressure relief, if pressure in the hydraulic active suspension 1000 is still relatively large or is relatively large in an operation process, the pressure relief valve 31 can be opened to relieve pressure, to ensure reliable working of the entire hydraulic active suspension 1000.

In a driving process of the vehicle, if damping of the hydraulic active suspension 1000 is relatively small, the body is relatively bumpy and therefore comfort is affected. Therefore, an amount of oil in each common channel can be adjusted by using a second control valve 8, to adjust the damping of the hydraulic active suspension 1000. When opening of the second control valve 8 is reduced and therefore an amount of oil that can flow through the common channel decreases, an amount of oil entering the common channel from a shock absorber decreases, to increase the damping. When the opening of the second control valve 8 is increased, an amount of oil entering the common channel from the shock absorber increases, to reduce the damping. Therefore, the damping of the hydraulic active suspension 1000 can be reliably adjusted.

When stiffness of the hydraulic active suspension 1000 is relatively large and therefore vehicle comfort is reduced, the third control valves 11 can be controlled to be opened, and oil in the second accumulators 10 can be a supplement to each common channel, so that the stiffness of the hydraulic active suspension 1000 can be reduced, and a bump buffering effect of the hydraulic active suspension 1000 can be improved.

In a driving process of the vehicle, if the vehicle is hit by a bump or the like, oil in a lower chamber 2012 of each shock absorber assembly 2 can enter the third accumulator 30 through the oil channel 204 to store energy, to implement fast pressure reduction. Because driving stability needs to be ensured for a front axle of the vehicle, and comfort mainly needs to be ensured for a rear axle of the vehicle, the third accumulator 30 corresponding to the left front shock absorber assembly 2 is located between the first accumulator 9 and the corresponding oil channel 204, and the third accumulator 30 corresponding to the right front shock absorber assembly 2 is located between the first accumulator 9 and the corresponding oil channel 204, thereby implementing fast pressure relief.

A vehicle according to embodiments of the present disclosure includes the hydraulic active suspension 1000 according to any one of the foregoing embodiments of the present disclosure.

According to the vehicle in the embodiments of the present disclosure, the hydraulic active suspension 1000 according to any one of the foregoing embodiments is arranged, so that the body height can be adjusted, and vehicle operation stability can be improved without compromising vehicle comfort, thereby effectively resolving a contradiction between the vehicle comfort and the operation stability. In addition, the stiffness and the damping can be further adjusted, so that the vehicle on which the hydraulic active suspension 1000 is arranged drives more stably. In addition, a flow path between the liquid storage apparatus and the lower chamber 2012 overlaps a flow path between the accumulator module and the lower chamber 2012. Therefore, the number of connection pipelines can be reduced, so that the structure of the entire hydraulic active suspension 1000 is compact, thereby facilitating space arrangement of the complete vehicle.

In the descriptions of the present disclosure, it should be understood that orientation or position relationships indicated by the terms such as "center", "longitudinal", "transverse", "length", "width", "thickness", "on", "under", "front", "rear", "left", "right", "vertical", "horizontal", "top", "bottom", "inside", "outside", "clockwise", "anticlockwise", "axial direction", "radial direction", and "circumferential direction" are orientation or position relationships shown based on accompanying drawings, and are used merely for ease of describing the present disclosure and brevity of description, rather than indicating or implying that indicated apparatuses or components must have particular orientations or must be constructed and operated in particular orientations. Therefore, such terms should not be construed as limitations to the present disclosure.

In addition, terms "first" and "second" are used merely for the purpose of description, and shall not be construed as indicating or implying relative importance or implying the number of indicated technical features. Therefore, a feature limited by "first" or "second" may explicitly or implicitly include one or more such features. In the descriptions of the present disclosure, "a plurality of" means two or more, unless otherwise definitely and specifically limited.

In the present disclosure, unless otherwise explicitly specified or defined, the terms such as "install", "connect", "connection", and "fasten" should be understood in a broad sense. For example, the connection may be a fastened connection, a detachable connection, or an integral connection; the connection may be a mechanical connection or an electrical connection; or the connection may be a direct connection, an indirect connection through an intermediate medium, internal communication between two components, or an interaction relationship between two components. A person of ordinary skill in the art may understand specific meanings of the foregoing terms in the present disclosure based on specific cases.

In the present disclosure, unless otherwise explicitly specified or defined, that a first feature is "on" or "under" a second feature may be that the first feature is in direct contact with the second feature, or the first feature is in indirect contact with the second feature through an intermediate medium. In addition, that a first feature is "over", "above", or "on" a second feature may be that the first feature is directly above or obliquely above the second feature, or may merely indicate that a horizontal position of the first feature is higher than that of the second feature. That a first feature is "beneath", "below", or "under" a second feature may be that the first feature is directly below or obliquely below the second feature, or may merely indicate that a horizontal position of the first feature is lower than that of the second feature.

In the descriptions of this specification, a description of a reference term such as "an embodiment", "some embodiments", "an example", "a specific example", or "some examples" means that a specific feature, structure, material, or characteristic that is described with reference to the embodiment or the example is included in at least one embodiment or example of the present disclosure. In this specification, schematic descriptions of the foregoing terms are not necessarily directed at the same embodiment or example. In addition, described specific features, structures, materials, or characteristics may be combined in proper manners in any one or more embodiments or examples.

## Claims

1. A hydraulic active suspension (1000), configured for a vehicle, comprising: a shock absorber (200), a common channel, an accumulator module, and a liquid storage apparatus, the shock absorber (200) having a housing (201), a piston (202), and a piston rod (203), the housing (201) being adapted to be connected to a wheel or an axle, the piston (202) being located in the housing (201) and defining an upper chamber (2011) and a lower chamber (2012) of the shock absorber (200), one end of the piston rod (203) being connected to the piston (202), the other end of the piston rod (203) projecting out of the housing (201) and being adapted to be connected to a body, both the liquid storage apparatus and the accumulator module being in communication with the lower chamber (2012) through the common channel, the liquid storage apparatus being configured to adjust a height of the vehicle, and the accumulator module being configured to adjust at least one of stiffness and damping of the shock absorber (200),
wherein a first end of the common channel is in communication with the lower chamber (2012), a second end of the common channel is in communication with the liquid storage apparatus, a module connection part is arranged on the common channel, and the module connection part is located between the first end and the second end and is configured to be in communication with the accumulator module,
wherein the module connection part comprises a first connection point and a second connection point, the accumulator module comprises a first accumulator (9), a second accumulator (10), a second control valve (8), and a third control valve (11), the first accumulator (9) is connected to the first connection point, the second accumulator (10) is connected to the second connection point, the second control valve (8) is connected between the first connection point and the lower chamber (2012), the third control valve (11) is arranged between the second accumulator (10) and the second connection point, the second control valve (8) is an adjustment valve to adjust the damping of the shock absorber (200), and the third control valve (11) is a cutoff valve to adjust the stiffness of the shock absorber (200),
**characterised in that** a fourth control valve (12) is arranged between the first connection point and the second connection point.

2. The hydraulic active suspension (1000) according to claim 1, wherein a first control valve (3) is arranged on the common channel, and the first control valve (3) is arranged between the second end and the module connection part.

3. The hydraulic active suspension (1000) according to claim 1 or 2, wherein the first accumulator (9) is in communication with the first connection point, the second control valve (8) is arranged between the first connection point and the lower chamber (2012); and the second control valve (8) is the adjustment valve configured to adjust opening to adjust the damping of the shock absorber (200).

4. The hydraulic active suspension (1000) according to any one of claims 1 to 3, wherein the second accumulator (10) is in communication with the second connection point, and the third control valve (11) selectively communicates the second connection point with the second accumulator (10).

5. The hydraulic active suspension (1000) according to claim 1, wherein the first connection point is arranged on a side of the second connection point away from the second end.

6. The hydraulic active suspension (1000) according to any one of claims 1 to 5, wherein the shock absorber (200) is a front-axle shock absorber, a third connection point is arranged between the module connection part and the first end, the hydraulic active suspension (1000) further comprises a third accumulator (30), and the third accumulator (30) is in communication with the third connection point.

7. The hydraulic active suspension (1000) according to claim 1 or 5, wherein the shock absorber (200) is a rear-axle shock absorber, the module connection part further comprises a third connection point, the third connection point is located between the first connection point and the second connection point, the accumulator module comprises a third accumulator (30), and the third accumulator (30) is in communication with the third connection point.

8. A vehicle, comprising the hydraulic active suspension (1000) according to any one of claims 1 to 7.

## Patentansprüche

1. Hydraulische aktive Aufhängung (1000), die für ein Fahrzeug konfiguriert ist, umfassend: einen Stoßdämpfer (200), einen gemeinsamen Kanal, ein Speichermodul und eine Flüssigkeitslagerungsvorrichtung, wobei der Stoßdämpfer (200) ein Gehäuse (201), einen Kolben (202) und eine Kolbenstange (203) aufweist, das Gehäuse (201) angepasst ist, um mit einem Rad oder einer Achse verknüpft zu werden, der Kolben (202) in dem Gehäuse (201) gelegen ist und eine obere Kammer (2011) und eine untere Kammer (2012) des Stoßdämpfers (200) definiert, ein Ende der Kolbenstange (203) mit dem Kolben (202) verknüpft ist, das andere Ende der Kolbenstange (203) aus dem Gehäuse (201) herausragt und angepasst ist, um mit einer Karosserie verknüpft zu werden, sowohl die Flüssigkeitslagerungsvorrichtung als auch das Speichermodul über den gemeinsamen Kanal mit der unteren Kammer (2012) in Verbindung stehen, die Flüssigkeitslagerungsvorrichtung konfiguriert ist, um eine Höhe des Fahrzeugs zu justieren, und das Speichermodul konfiguriert ist, um mindestens eines von Steifigkeit und Dämpfung des Stoßdämpfers (200) zu justieren,
wobei ein erstes Ende des gemeinsamen Kanals mit der unteren Kammer (2012) in Verbindung steht, ein zweites Ende des gemeinsamen Kanals mit der Flüssigkeitslagerungsvorrichtung in Verbindung steht, ein Modulverknüpfungsteil an dem gemeinsamen Kanal angeordnet ist und das Modulverknüpfungsteil zwischen dem ersten Ende und dem zweiten Ende gelegen und konfiguriert ist, um mit dem Speichermodul in Verbindung zu stehen,
wobei das Modulverknüpfungsteil eine erste Verknüpfungsstelle und eine zweite Verknüpfungsstelle umfasst, das Speichermodul einen ersten Speicher (9), einen zweiten Speicher (10), ein zweites Steuerventil (8) und ein drittes Steuerventil (11) umfasst, der erste Speicher (9) mit der ersten Verknüpfungsstelle verknüpft ist, der zweite Speicher (10) mit der zweiten Verknüpfungsstelle verknüpft ist, das zweite Steuerventil (8) zwischen der ersten Verknüpfungsstelle und der unteren Kammer (2012) verknüpft ist, das dritte Steuerventil (11) zwischen dem zweiten Speicher (10) und der zweiten Verknüpfungsstelle angeordnet ist, das zweite Steuerventil (8) ein Justierventil ist, um die Dämpfung des Stoßdämpfers (200) zu justieren, und das dritte Steuerventil (11) ein Absperrventil ist, um die Steifigkeit des Stoßdämpfers (200) zu justieren,
**dadurch gekennzeichnet, dass** ein viertes Steuerventil (12) zwischen der ersten Verknüpfungsstelle und der zweiten Verknüpfungsstelle angeordnet ist.

2. Hydraulische aktive Aufhängung (1000) nach Anspruch 1, wobei ein erstes Steuerventil (3) an dem gemeinsamen Kanal angeordnet ist und das erste Steuerventil (3) zwischen dem zweiten Ende und dem Modulverknüpfungsteil angeordnet ist.

3. Hydraulische aktive Aufhängung (1000) nach Anspruch 1 oder 2, wobei der erste Speicher (9) mit der ersten Verknüpfungsstelle in Verbindung steht, das zweite Steuerventil (8) zwischen der ersten Verknüpfungsstelle und der unteren Kammer (2012) angeordnet ist; und das zweite Steuerventil (8) das Justierventil ist, das angepasst ist, um die Öffnung zu justieren, um die Dämpfung des Stoßdämpfers (200) zu justieren.

4. Hydraulische aktive Aufhängung (1000) nach einem der Ansprüche 1 bis 3, wobei der zweite Speicher (10) mit der zweiten Verknüpfungsstelle in Verbindung steht und das dritte Steuerventil (11) die zweite Verknüpfungsstelle mit dem zweiten Speicher (10) selektiv verbindet.

5. Hydraulische aktive Aufhängung (1000) nach Anspruch 1, wobei die erste Verknüpfungsstelle auf einer von dem zweiten Ende abgewandten Seite der zweiten Verknüpfungsstelle angeordnet ist.

6. Hydraulische aktive Aufhängung (1000) nach einem der Ansprüche 1 bis 5, wobei der Stoßdämpfer (200) ein Vorderachsstoßdämpfer ist, eine dritte Verknüpfungsstelle zwischen dem Modulverknüpfungsteil und dem ersten Ende angeordnet ist, die hydraulische aktive Aufhängung (1000) ferner einen dritten Speicher (30) umfasst, und der dritte Speicher (30) mit der dritten Verknüpfungsstelle in Verbindung steht.

7. Hydraulische aktive Aufhängung (1000) nach Anspruch 1 oder 5, wobei der Stoßdämpfer (200) ein Hinterachsstoßdämpfer ist, das Modulverknüpfungsteil ferner eine dritte Verknüpfungsstelle umfasst, die dritte Verknüpfungsstelle zwischen der ersten Verknüpfungsstelle und der zweiten Verknüpfungsstelle gelegen ist, das Speichermodul einen dritten Speicher (30) umfasst und der dritte Speicher (30) mit der dritten Verknüpfungsstelle in Verbindung steht.

8. Fahrzeug, umfassend die hydraulische aktive Aufhängung (1000) nach einem der Ansprüche 1 bis 7.

## Revendications

1. Suspension active hydraulique (1000), conçue pour un véhicule, comprenant : un amortisseur (200), un canal commun, un module accumulateur et un appareil de stockage de liquide, l'amortisseur (200) ayant un boîtier (201), un piston (202) et une tige de piston (203), le boîtier (201) étant adapté à être relié à une roue ou à un essieu, le piston (202) étant situé dans le boîtier (201) et définissant une chambre supérieure (2011) et une chambre inférieure (2012) de l'amortisseur (200), une extrémité de la tige de piston (203) étant reliée au piston (202), l'autre extrémité de la tige de piston (203) faisant saillie hors du boîtier (201) et étant adaptée à être reliée à un corps, à la fois l'appareil de stockage de liquide et le module accumulateur étant en communication avec la chambre inférieure (2012) par le biais du canal commun, l'appareil de stockage de liquide étant conçu pour régler une hauteur du véhicule, et le module accumulateur étant conçu pour régler au moins l'un parmi une rigidité et un amortissement de l'amortisseur (200),
dans laquelle une première extrémité du canal commun est en communication avec la chambre inférieure (2012), une seconde extrémité du canal commun est en communication avec l'appareil de stockage de liquide, une partie de liaison de module est agencée sur le canal commun, et la partie de liaison de module est située entre la première extrémité et la seconde extrémité et est conçue pour être en communication avec le module accumulateur,
dans laquelle la partie de liaison de module comprend un premier point de liaison et un deuxième point de liaison, le module accumulateur comprend un premier accumulateur (9), un deuxième accumulateur (10), une deuxième soupape de commande (8) et une troisième soupape de commande (11), le premier accumulateur (9) est relié au premier point de liaison, le deuxième accumulateur (10) est relié au deuxième point de liaison, la deuxième soupape de commande (8) est reliée entre le premier point de liaison et la chambre inférieure (2012), la troisième soupape de commande (11) est agencée entre le deuxième accumulateur (10) et le deuxième point de liaison, la deuxième soupape de commande (8) est une soupape de réglage pour régler l'amortissement de l'amortisseur (200), et la troisième soupape de commande (11) est une soupape de coupure pour régler la rigidité de l'amortisseur (200),
**caractérisée en ce qu'**une quatrième soupape de commande (12) est agencée entre le premier point de liaison et le deuxième point de liaison.

2. Suspension active hydraulique (1000) selon la revendication 1, dans laquelle une première soupape de commande (3) est agencée sur le canal commun, et la première soupape de commande (3) est agencée entre la seconde extrémité et la partie de liaison de module.

3. Suspension active hydraulique (1000) selon la revendication 1 ou 2, dans laquelle le premier accumulateur (9) est en communication avec le premier point de liaison, la deuxième soupape de commande (8) est agencée entre le premier point de liaison et la chambre inférieure (2012) ; et la deuxième soupape de commande (8) est la soupape de réglage conçue pour régler une ouverture afin de régler l'amortissement de l'amortisseur (200).

4. Suspension active hydraulique (1000) selon l'une quelconque des revendications 1 à 3, dans laquelle le deuxième accumulateur (10) est en communication avec le deuxième point de liaison, et la troisième soupape de commande (11) fait communiquer sélectivement le deuxième point de liaison avec le deuxième accumulateur (10).

5. Suspension active hydraulique (1000) selon la revendication 1, dans laquelle le premier point de liaison est agencé sur un côté du deuxième point de liaison éloigné de la seconde extrémité.

6. Suspension active hydraulique (1000) selon l'une quelconque des revendications 1 à 5, dans laquelle l'amortisseur (200) est un amortisseur d'essieu avant, un troisième point de liaison est agencé entre la partie de liaison de module et la première extrémité, la suspension active hydraulique (1000) comprend en outre un troisième accumulateur (30), et le troisième accumulateur (30) est en communication avec le troisième point de liaison.

7. Suspension active hydraulique (1000) selon la revendication 1 ou 5, dans laquelle l'amortisseur (200) est un amortisseur d'essieu arrière, la partie de liaison de module comprend en outre un troisième point de liaison, le troisième point de liaison est situé entre le premier point de liaison et le deuxième point de liaison, le module accumulateur comprend un troisième accumulateur (30), et le troisième accumulateur (30) est en communication avec le troisième point de liaison.

8. Véhicule, comprenant la suspension active hydraulique (1000) selon l'une quelconque des revendications 1 à 7.
